# EUROPÄISCHE PATENTSCHRIFT

(11) **EP 2 366 839 B1**
(45) Veröffentlichungstag und Bekanntmachung des Hinweises auf die Patenterteilung: **20.04.2016**
(21) Anmeldenummer: 10156447.4
(22) Anmeldetag: 12.03.2010
(51) Int. Cl.: E03F 5/12, B01D 33/21

(54) **Scheibenfiltersystem zur Zurückhaltung von Fein- und Grobstoffen aus strömenden Flüssigkeiten**
Disc filter system for retaining fine and large material from flowing liquids
Système de filtre de plaques pour la retenue de particules fines et grossières issues de liquides s'écoulant

(43) Veröffentlichungstag der Anmeldung: 21.09.2011
(73) Patentinhaber: HST-WKS Hydro-Systemtechnik GmbH, 01237 Dresden (DE)
(72) Erfinder: Wuensch, Holger, 01217, Dresden (DE); Marx, Axel, 01187, Dresden (DE); Augustin, Juergen, 01844, Neustadt (DE); Soehner, Gerd, 01277, Dresden (DE)
(74) Vertreter: Sperling, Thomas

(56) Entgegenhaltungen:
- DE-A1- 19 801 104
- JP-A- 11 226 317
- JP-A- 2000 300 968

## Beschreibung

Die Erfindung betrifft ein Entlastungsbauwerk mit einem Scheibenfiltersystem zur Zurückhaltung von Fein- und Grobstoffen aus strömenden Flüssigkeiten, welches insbesondere der mechanischen Reinigung von kommunalen und industriellen Abwässern dient.

Mit Hilfe von Filtern, wie Rechen und Siebe, werden schwimmende und wirbelnde Fein- und Grobstoffe mechanisch zurückgehalten.

Wichtige Einsatzgebiete der gattungsgemäßen Filter sind Trenn-, Entlastungs-, Überlauf- oder Abschlagsbauwerke in wasserwirtschaftlichen Anlagen. Die genannten Bauwerke dienen der Regulierung gegen Überschreitungsgefahren der Kanalkapazitäten oder Bearbeitungskapazitäten in Kläranlagen bei starken Regenfällen oder bei Hochwasser. Das entstehende Entlastungswasser wird in Trennbauwerken oder Regenüberläufen durch den Filtereinsatz mechanisch gereinigt in das als Vorfluter dienende Gewässer abgegeben.

Die Gefährdung des Vorfluters durch Verschmutzung aus unbehandeltem Mischwasser ist ohne Filter in der Regel sehr hoch, da bei den starken Niederschlägen, die typischerweise solche Ereignisse auslösen, auch Kanalablagerungen vom Abwasserstrom mitgeführt werden. Ohne Filter würden unästhetische wie auch gesundheitsgefährdende Stoffe, so beispielsweise Kunststoff- und Holzteile, Obstreste, Hygieneartikel, Kotballen, Injektionsspritzen, und anderes mehr in den Wirkungsbereich von Natur beziehungsweise Mensch ausgetragen.

Im Stand der Technik sind diverse konstruktive Filter-Bauformen, wie Rechen, Siebe, Stabrechen, Stufenrechen, Klapprechen und Siebtrommeln, für den Einsatz in Entlastungsbauwerken des Kanalnetzes oder in Kläranlagen bekannt. -

Beispielsweise geht aus der DE 102 53 834 A1 eine Wasserüberlaufanordnung hervor, die einen Rechen in einem Heber vorsieht. Der Rechen ist dabei in Form von Stäben ausgebildet, die siebartig angeordnet sind.

Weiterhin ist aus der DE 10 2007 036 470 A1 ein Siebrechen an einer Überlaufschwelle einer Regenentlastungsanlage bekannt, in der quer zur Überlaufschwelle angeordnete Rechenstäbe und in diese kammartig eingreifende Abstreifer offenbart werden. Mittels eines Kurbelantriebes werden die Abstreifer in eine kurvenlinienförmig verlaufende, kreisende Bewegung versetzt, durch die die Abstreifer von oben in die Zwischenräume der Rechenstäbe hinein und unten an der Überlaufschwelle wieder herausgeführt werden. Dadurch wird die Gefahr des Feststoffaustrags in die Gewässer infolge mechanischer Einwirkungen auf die Feststoffe beim Abstreifvorgang vermindert und die Betriebssicherheit erhöht.

Aus der DE 36 15 499 C2 geht ein Querstromrotationsrechen hervor, welcher zur Reinigung des einer Wasserkraftmaschine zufließenden Mediums von Schwemmgut vorgesehen ist und der aus einzelnen Rechenringen, die zu einer Trommel verbunden sind, besteht. Die Trommel ist an ihren beiden Stirnseiten in den Gerinnewänden gelagert. Die Aufnahmevorrichtung für das schwimmend zu entsorgende Schwemmgut ist unterstrom der Trommel angeordnet und als zwischen die Rechenringe greifende Harke ausgebildet. Die Verbindungselemente für die Rechenringe sind als gekrümmte Schaufeln entsprechend einer Querstromturbine ausgestaltet und die Rechentrommel ist vollständig unter Wasser angeordnet.

Nach der DE 31 38 674 C2 ist eine Sieb- und Rechenvorrichtung zur mechanischen Reinigung von Schmutzwasser bekannt mit einem in einem Wassergerinne angeordneten Rechen- oder Siebrost und einer angrenzend an den Rost angeordneten Fördereinrichtung zum Hochfördern von Schwemmgut aus dem Gerinne, wobei eine vertikale Förderschnecke mit einem Gehäuse vorgesehen ist, welches eine Aufnahmeöffnung aufweist. Der Rost ist mit Querfördermitteln zum Fördern des am Rost zurückgehaltenen Schwemmgutes in Querrichtung zu der Förderschnecke versehen und die Aufnahmeöffnung des Gehäuses der Förderschnecke ist dem Rost zugewendet.

Aus der JP 2000300968 A geht ein Verfahren zum Betreiben eines Membranfilters hervor, wobei die Membranen auf rotierenden Scheiben angeordnet sind.

Die gattungsgemäße DE 19801104 A1 offenbart einen Siebrechen als Überlaufbauwerk, der drehbeweglich gelagert ist und in Abhängigkeit des Wasserstandes derart positioniert werden kann, dass durch die Neigung des Siebrechens immer die maximale Filterfläche realisierbar ist.

Die JP 11226317 A zeigt eine Vorrichtung und ein Verfahren für ein rotierendes Scheibenfiltersystem, wobei eine Filtration durch die Membran-Scheibenfilterelemente hindurch erfolgt.

Die im Stand der Technik bekannten Filter sind teilweise mechanisch sehr aufwändig gestaltet und störungsanfällig. Einige der Nachteile werden durch sogenannte Scheibenrechen, die aus vertikal angeordneten Scheibenwellen bestehen, überwunden. Die Prinziplösung dieser Scheibenrechen ist als Vorrichtung mit zentralem Elektroantrieb bekannt. Das Wirkprinzip dieser Scheibenrechen besteht darin, dass vertikal zueinander beabstandete Wellen mit ihren Filterscheiben ineinander eingreifen und dadurch schlitzartige Strukturen ausbilden. Dadurch werden Grob- und Feinstoffe in Abhängigkeit der Abstände der Filterscheiben benachbarter Filterrotoren zueinander und der sich dadurch ausbildenden Schlitze zurückgehalten, das flüssige Medium wird jedoch durchgelassen.

Derartige Scheibenrechen mit vertikal angeordneten Scheibenwellen werden bereits in der Praxis eingesetzt. Der Antrieb der Scheibenwellen erfolgt oberhalb des Scheibenrechenrahmens im Direktschluss oder von einem zentralen Antriebssystem, wobei die Bewegung vom zentralen Antrieb durch Ketten oder Zahnräder auf die einzelnen Wellen übertragen wird. Dies hat den Nachteil, dass der Betrieb der bekannten Scheibenrechen energetisch nicht ausreichend effizient ist.

Es ist Aufgabe der Erfindung, ein Entlastungsbauwerk mit einem Scheibenfiltersystem für die mechanische Fein- und Grobreinigung von Abwasserströmen dahingehend konstruktiv als System neu zu gestalten, sodass eine energieeffiziente Nutzung und eine höhere Abscheideleistung erreicht werden.

Darüber hinaus besteht die Aufgabe der Erfindung darin, die Funktionssicherheit und Zuverlässigkeit des Filters zu erhöhen. Zusätzlich soll durch das neue Filtersystem die Universalität für unterschiedliche Strömungs- und Einbauverhältnisse erreicht werden. Weiterhin besteht die Aufgabe der Erfindung darin, ein Verfahren zur Regelung der erfindungsgemässen Entlastungsbauwerte bereitzustellen.

Die Aufgabe der Erfindung wird durch ein Entlastungsbauwerk mit einem Scheibenfiltersystem zur Zurückhaltung von Fein- und Grobstoffen aus strömenden Flüssigkeiten gemäß Anspruch 1 gelöst, wobei das Scheibenfiltersystem auf einer Entlastungsschwelle des Entlastungsbauwerks angeordnet ist. Insbesondere ist das Scheibenfiltersystem dadurch gekennzeichnet, dass ein Scheibenfilter aus mehreren parallelen, horizontal und übereinander angeordneten und mit unterschiedlichen Drehzahlen antreibbaren Filterrotoren aufgebaut ist. Dabei bestehen die Filterrotoren jeweils aus einer Vielzahl von auf einer Welle angeordneten und zueinander exakt beabstandeten Transportbeziehungsweise Auskämmscheiben, die im Weiteren als Auskämmscheiben bezeichnet werden. Die Filterrotoren sind derart zueinander angeordnet, dass die Auskämmscheiben von in vertikaler Richtung benachbarten Filterrotoren jeweils ineinander eingreifen und durch einen definierten, lichten Abstand eine schlitz- beziehungsweise filterartige Struktur bilden.
Durch die Bewegung der Filterrotoren wird verhindert, dass sich an dem Scheibenfiltersystem Ablagerungen von Grobstoffen bilden, die nur mit zusätzlichem Aufwand wieder entfernt werden könnten. Insbesondere führt die Drehzahlsteigerung zu einem verbesserten Abtransport der zurückgehaltenen Schmutzstoffe.

Nach einer bevorzugten Ausgestaltung der Erfindung sind die Filterrotoren beidseitig in einem umlaufenden Rahmen drehbar gelagert. Die Anordnung der Lager an dem umlaufenden Rahmen hat diverse Vorteile. Zum einen kann der Scheibenfilter somit effizient vorgefertigt und bereits komplett montiert zum Einsatzort gebracht werden und zum anderen ist auf den gegenüberliegenden Seiten des stabilen Rahmens die exakte Positionierung der Filterrotoren sichergestellt. Die Lager der Rotoren werden am Rahmen justiert und somit die Abstände zwischen den Filterrotoren exakt eingestellt.

Eine vorteilhafte Weiterbildung der vorangegangenen Ausgestaltung wird dadurch erreicht, dass der komplette Scheibenfilter aus Rahmen, Filterrotor und Antriebs- und Lagersystem schwenkbar ausgebildet ist. Der Drehpunkt befindet sich im abgedichteten Bereich des Rahmens zur Schwelle. Der Rahmen ist dabei bevorzugt in einem Schwenkwinkel von 60° bewegbar ausgebildet. Durch das Ausschwenken des Rahmens und der damit verbundenen Vergrößerung der durchströmten Filterfläche wird die Leistung des Scheibenfilters erhöht, was sowohl für die horizontale als auch vertikale Anordnung der Rotoren zutrifft. Insbesondere kann durch das Ausschwenken des Scheibenfilters der Überströmwasserstand eingestellt werden. Das bedeutet einen wesentlichen Funktionsvorteil gegenüber den bisher bekannten Lösungen.

Besonders vorteilhaft ist es, wenn jeder Filterrotor einen eigenen Direktantrieb aufweist. Dadurch wird es möglich, nur die Filterrotoren anzutreiben, die sich momentan unterhalb des Oberwasserspiegels befinden und somit als Abscheideelemente wirken. Diese Lösung ist bei der horizontalen Anordnung der Filterrotoren möglich.

Als Direktantrieb für die horizontale und vertikale Einbaulage der Rotoren werden bevorzugt Hydraulikmotoren vorgesehen. Dabei ist zu beachten, dass sich die Antriebe im horizontalen Einsatzfall unter der Wasseroberfläche befinden und entsprechend hergerichtet sein müssen.

Eine ganz besonders energieeffiziente Ausgestaltung der Erfindung ergibt sich dadurch, wenn Sensoren für die Messung des Wasserstandes und/oder der Fließgeschwindigkeit sowie eine zugehörige Regeleinrichtung zur Regelung der Drehzahl der Filterrotoren und der Neigung der Schwenkrahmen des Schwenkfilters vorgesehen sind.

Weiterhin wird die Aufgabe der Enfindung durch ein Verfahren gemäss Anspruch 9 gelöst. Ein Verfahren zur Regelung eines Scheibenfilters mit horizontalen Filterrotoren wird dadurch ausgestaltet, dass der Wasserstand mittels eines Sensors festgestellt wird und in dessen Abhängigkeit nur diejenigen Filterrotoren angetrieben werden, die von Mischwasser durchströmt werden. Dies folgt der Konzeption, dass nur die unter der Wasseroberfläche befindlichen Filterrotoren eine Filterwirkung erzielen und die nicht wirksamen Filterrotoren nicht bewegt werden müssen. Dadurch lässt sich eine signifikante Energieeinsparung gegenüber Filterrotoren in vertikaler Anordnung erreichen.

Eine weitere vorteilhafte Ausgestaltung der Erfindung besteht darin, dass der Scheibenfilter in Abhängigkeit der hydraulischen beziehungsweise bautechnischen Situation mit einer manuellen oder automatischen Neigungsregelung ausgestattet ist. Diese Ausführung gestattet die Regelung der Notüberströmfunktion und des Überströmwasserstandes des Scheibenfilters in Abhängigkeit des gemessenen Oberwasserstandes. Dabei wird die Neigung des Schwenkrahmens zur Regelung der Überströmfunktion in Abhängigkeit des Wasserstandes verändert.

Eine weitere Ausgestaltung der Erfindung ergibt sich dadurch, dass die Neigung des Schwenkrahmens zur Regelung der wirksamen Filterfläche in Abhängigkeit des Wasserstandes eingesetzt wird. Diese hervorragende Funktionseigenschaft ist gleichfalls für die Nachrüstung bei bestehenden Bauwerken als auch für hydraulische Besonderheiten von großem Vorteil.

Nach der Konzeption der Erfindung ist die unabhängige Einstellung der Drehzahlen der einzelnen Filterrotoren bis hin zum Abschalten der Filterrotoren für das Ziel des energieeffizienten Betreibens des Scheibenfilters von energetischem sowie wartungs- und verschleißtechnischem Vorteil.

Nach einer bevorzugten Ausgestaltung einer Implementierung der Information des Wasserstandes im Zulauf mit Hilfe einer Wasserstandsmessung kann die regelungstechnische Verknüpfung mit dem Antrieb der Filterelemente als Alternative zur manuellen Schaltung der Filterrotoren automatisch erfolgen.

Die Vorteile der Erfindung bestehen weiterhin darin, dass generell einstellbare und unterschiedliche Drehzahlen für die Filterrotoren zur Verbesserung des Rückhaltes und des Transports der Schwimm- und Wirbelstoffe hydraulisch einfach realisierbar sind und somit zur signifikanten Energieeinsparung führen. Das trifft sowohl für die horizontale als auch vertikale Anordnung der Filterrotoren zu.

Bei konzeptionsgemäßem Einbau der Filterrotoren in waagerechter Lage, in Verbindung mit der regelungstechnischen Verknüpfung mit dem Wasserstand, ist die automatische Inbetriebnahme der einzelnen Rotoren in Abhängigkeit vom Wasserstand möglich. Die unabhängige Drehzahleinstellungsmöglichkeit für die Filterrotoren führt dazu, dass nur Rotoren bewegt werden, die auch tatsächlich aktiv an der Zurückhaltung von Grob- und Schwimmstoffen beteiligt sind. Dies geschieht, im Unterschied zu der Ausgestaltung von Scheibenrechen nach dem Stand der Technik, wo immer alle vertikal angeordneten Scheibenrechen bewegt werden müssen, ganz unabhängig davon, wie hoch der Wasserstand aktuell ist.

Der Einbau der Rotoren in Schwenkrahmen und deren regelungstechnische Verknüpfung mit dem Wasserspiegel zur Regelung der Überströmfunktion stellt einen weiteren innovativen Aspekt der Erfindung dar.
Die Vorteile der erfindungsgemäßen Realisierung des Scheibenfilters in Verbindung mit dem zugehörigen Regelungsverfahren bestehen gegenüber Vorrichtungen aus dem Stand der Technik darin, dass neben der Erhöhung von Durchsatzleistung, Funktionssicherheit und Zuverlässigkeit sich auch die Investitions- und Betriebskosten verringern. Weiterhin ergeben sich Vorteile durch die Realisierung der Universalität des Rechens bezüglich der Einbaulage und die technische Störungsfreiheit bei einstauendem Unterwasser. Das betrifft vor allem die große Anzahl nachzurüstender bestehender Bauwerke mit ungünstigen hydraulischen Verhältnissen.

Wesentliche Vorteile bestehen somit in der Erhöhung der Einsatzmöglichkeiten und der Funktionssicherheit des Scheibenfilters durch die oberwasserseitige Messung und regelungstechnische Einbindung in die Wasserführung. Weiterhin wird eine wesentliche Erhöhung der Zuverlässigkeit der Vorrichtung durch den belastungsabhängigen Betrieb der Rotoren und die vorgeschlagenen technischen Maßnahmen erreicht.

Weitere Einzelheiten, Merkmale und Vorteile der Erfindung ergeben sich aus der nachfolgenden Beschreibung von Ausführungsbeispielen mit Bezugnahme auf die zugehörigen Zeichnungen. Es zeigen:
- Figur 1:: Prinzipdarstellung eines Scheibenfilters mit horizontal angeordneten Filterrotoren,
- Figur 2:: Querschnittsdarstellung eines Entlastungsbauwerkes mit Scheibenfilter,
- Figur 3:: Direktantrieb und Lagerung der Filterrotoren,
- Figur 4:: Prinzipdarstellung eines Scheibenfilters mit wasserstandsabhängiger Regelung der Filterneigung und
- Figur 5:: Prinzipdarstellung der Endlagen beziehungsweise des Schmutzaustrages eines Scheibenfilters.

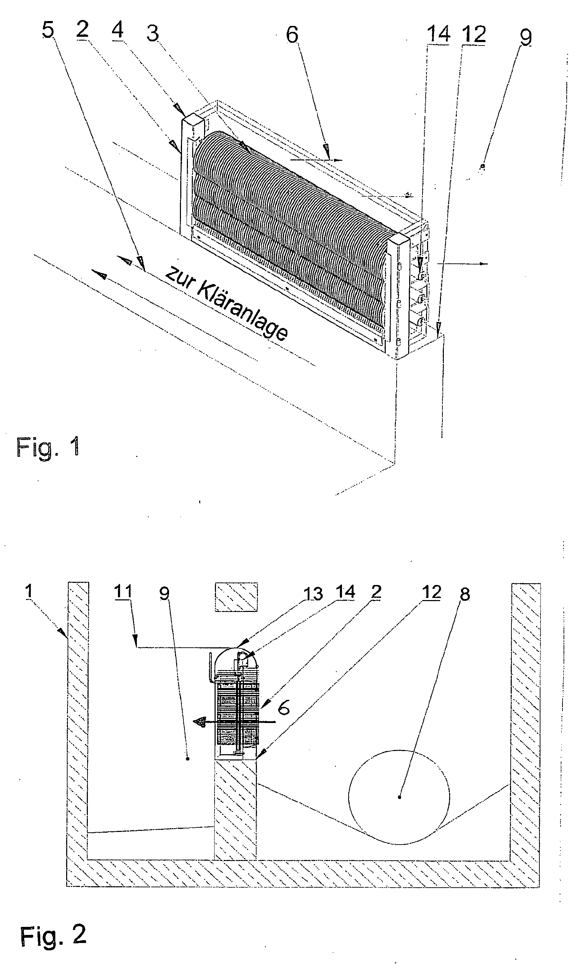

Figur 1 zeigt den Einsatz eines Scheibenfilters 2 in Verbindung mit einer Entlastungsschwelle 12 als Prinzipdarstellung. Der Scheibenfilter 2 ist auf der Entlastungsschwelle 12 angeordnet. Ab Erreichen eines nicht dargestellten minimalen Überlaufwasserstandes wird ein Teil des Oberwassers beziehungsweise des in Abwasserströmungsrichtung 5 fließenden Abwasserstromes durch die Schlitze zwischen den Scheiben der Filterrotoren 3 hindurch in Richtung Unterwasser oder des Vorfluters 9 strömen. Die Filtrations- und Überlaufströmungsrichtung 6 wird soweit möglich rechtwinklig zur Abwasserströmungsrichtung 5 gewählt, um eine gute Filtereffizienz bei geringer Störanfälligkeit des Scheibenfiltersystems zu gewährleisten.

Der Scheibenfilter 2 allgemein besteht aus mehreren parallelen, horizontal und übereinander beziehungsweise vertikal nebeneinander, angeordneten Filterrotoren 3. Die Filterrotoren 3 verfügen über eine definierte Anzahl von zueinander beabstandeten Transport- beziehungsweise Auskämmscheiben 15, wobei die Scheiben 15 benachbarter-Filterrotoren 3 ineinander eingreifen und damit den Filtereffekt für das abströmende Abwasser realisieren. Die Scheiben sind mit einem lichten Abstand ab drei mm oder größer parallel zueinander auf dem Filterrotor 3 angeordnet. Indem die Transport- beziehungsweise Auskämmscheiben 15 rotieren, werden das Absetzen und die Ablagerung von Schwimm- und Schwebestoffen an den Scheiben 15 des Scheibenfilters 2 verhindert.
In der dargestellten Ausgestaltung sind die Filterrotoren 3 in einem Rahmen 4, der als Schwenkrahmen ausgebildet ist, montiert. An dem Rahmen 4 sind Direktantriebe 14 für die einzelnen Filterrotoren 3 vorgesehen. Die Filterrotoren 3 sind somit in der Lage, mit unterschiedlichen Drehzahlen zu rotieren.

Dadurch ist ein Einsatz beziehungsweise ein Betreiben der Filterrotoren 3 in Abhängigkeit des Wasserstandes möglich. Es werden gezielt nur die Filterrotoren 3 bewegt, die sich unter der oberwasserseitigen Wasseroberfläche befinden.

Weiterhin ist eine Einflussnahme auf die Filtrationsgeschwindigkeit beziehungsweise die Durchlassfähigkeit des Filters 2 durch die Veränderung der Drehzahlen möglich.

Figur 2 zeigt ein schematisches Entlastungsbauwerk 1 als Regenüberlaufbecken im Querschnitt mit einem Scheibenfilter 2 auf einer Entlastungsschwelle 12. Das Abwasser strömt im Normalfall im oberwasserseitigen Abwasserkanal 8, das heißt im Gerinne vor der Entlastungsschwelle 12 in Richtung der Kläranlage.

In dem dargestellten Entlastungsbauwerk 1 ist der Abwasserkanal 8 durch eine Entlastungsschwelle 12 vom Vorfluter 9 getrennt. Der Scheibenfilter 2 bildet die Verlängerung der Entlastungsschwelle 12 nach oben. Bei einer ereignisbedingten Entlastung aus dem Abwasserkanal 8 wird das dem Vorfluter 9 zuströmende Wasser durch den Scheibenfilter 2 geführt und mechanisch gereinigt.

Die Entlastung aus dem Abwasserkanal 8 tritt ein, sobald das Oberwasser eine definierte Entlastungskante übersteigt. Diese wird durch die Höhe der Entlastungsschwelle 12 definiert.
Steigt der Wasserstand weiter, wird der Scheibenfilter 2 vom Abwasser in Richtung der Filtrations- und Überlaufströmungsrichtung 6 durchströmt und dieses in den Vorfluter 9 abgeleitet.
Die Filterfunktion des Scheibenfilters 2 besteht, solange der Überströmwasserstand 11 nicht überschritten wird. Übersteigt der Wasserstand diese Position, so überströmt das Mischwasser dann ohne wesentlichen Einfluss oder mechanische Reinigung den Scheibenfilter 2. Der maximale Überströmwasserstand 11 ist somit gleichzeitig auch der sogenannte Überlaufwasserstand.

Beispielhaft gelten folgende technische Parameter im Rahmen eines Baukastensystems:

| **Filterabmessung, beispielhaft [mm]** | **max. Durchsatz [m³/s]** | **max. Fluidgeschwindigkeit im Filtersystem [m/s]** | **Scheibenabstand [mm]** |
|---|---|---|---|
| 3500 × 500 | 0,91 | 1,36 | 4 |
| 4700 × 700 | 1,76 | 1,56 | 4 |
| 5000 × 500 | 1,19 | 1,32 | 4 |
| 6000 × 700 | 2,32 | 1,56 | 4 |

Weitere technische Parameter sind
- Anordnung der Filterrotoren: horizontal/vertikal,
- Filterscheibenabstand: 3 bis 10 mm,
- Drehzahlen der Filterrotoren: 60 bis 100 U/min,
- Schwenkwinkel des Scheibenfilters: bis 60° und
- Einbindung der Schwenk-Regelung in ein Prozessleitsystem.

Der Antrieb der Filterrotoren 3 erfolgt über aufgesetzte Hydraulikmotoren als Direktantrieb 14, wodurch die komplette Mechanik der Bewegungsübertragung zum Antrieb der Filterrotoren 3 gegenüber dem Stand der Technik eingespart werden kann. Außerdem kann auf das obere Loslager, im Vergleich zur vertikalen Anordnung der Filterrotoren 3 nach dem Stand der Technik, verzichtet werden.

Eine weitere vorteilhafte Ausgestaltung besteht in der optimierten Form des Abdeckbleches beziehungsweise der Abdeckhaube 13 für eine strömungsgünstige Überflutung. Die Ausgestaltung der Abdeckhaube 13 begünstigt durch die kreisrunde Form die Überflutung im Hochwasserfall und es wird somit mehr Wasser über den Scheibenfilter 2 befördert. Daraus resultiert, dass die Öffnung zwischen Scheibenfiltersystem und Bauwerk minimiert werden kann.

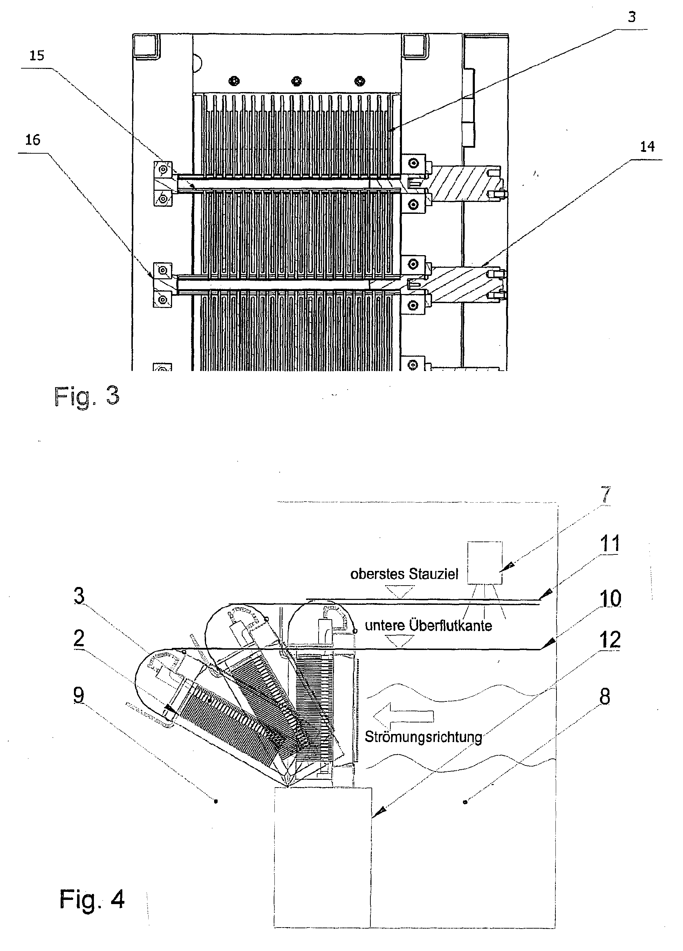

In Figur 3 sind die Direktantriebe 14 und die Lagerung der Filterrotoren 3 dargestellt. Die Filterrotoren 3 sind aus auf einer Welle angeordneten, runden Transport- beziehungsweise Auskämmscheiben 15 aufgebaut und werden durch einen Direktantrieb 14 rotierend bewegt. In der dargestellten Ausgestaltung sind die Direktantriebe 14 der einzelnen Filterrotoren 3 als Hydraulikmotoren realisiert.
Die Transport- beziehungsweise Auskämmscheiben 15 werden aus Kunststoff (Polyethylen 100) oder aus Edelstahl gefertigt und auf eine Welle aufgesteckt, wobei die Drehmomentübertragung durch Formschluss zwischen Welle und Transport- beziehungsweise Auskämmscheibe 15 erfolgt.
Der Austausch einzelner Transport- beziehungsweise Auskämmscheiben 15 ist im Bedarfsfall jederzeit möglich.
Die Wellen der Filterrotoren 3 sind endseitig mittels einer Gleitbuchse 16 gelagert. Es erfolgt eine Optimierung der Lagerböcke durch die Verwendung von Gleitbuchsen 16 aus PE-HD 1000. Hierdurch wird eine wesentliche Störungsquelle von Lagerungen nach dem Stand der Technik ausgeschlossen.

Figur 4 zeigt das Scheibenfiltersystem mit dem Wasserstandssensor 7 und dem schwenkbaren Scheibenfilter 2. Als Regelsystem ausgebildet wird je nach festgelegtem minimalen Überlaufwasserstand 10 beziehungsweise maximalem Betriebswasserstand 11 das Regelsignal vom Wasserstandssensor 7 auf die Regelung des Schwenkmechanismus des Scheibenfilters 2 mit den Filterrotoren 3 übertragen. Der Schwenkmechanismus für den Scheibenfilter 2 ist vorzugsweise als Hydraulikzylinder ausgebildet. Der Drehpunkt des Schwenkrahmens 4 des Scheibenfilters 2 befindet sich im dargestellten Ausführungsbeispiel unmittelbar auf der Entlastungsschwelle 12.

Vorteilhaft für dieses Regelsystem ist die Einstellung beziehungsweise Regelung des minimalen Überlaufwasserstandes 10 in Abhängigkeit der vorhandenen Betriebsbedingungen.

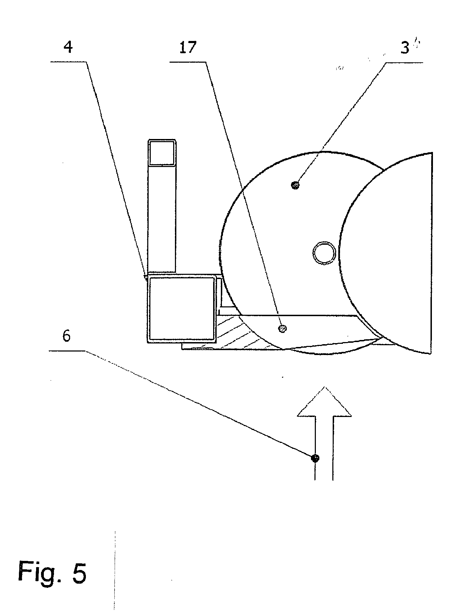

Figur 5 zeigt eine Prinzipdarstellung der Endlagen beziehungsweise des Schmutzaustrages 17 eines Scheibenfilters 2.
Eine Besonderheit der Ausgestaltung besteht in der gekröpften Form des Schmutzaustrages 17 aus PE-HD 100 oder Edelstahl an den Seiten. Der Schmutzaustrag 17 ist am Rahmen 4 des Scheibenfilters 2 angebracht und greift horizontal endseitig der Filterrotoren 3 die Schmutzstoffe ab. Der Abtransport der abgeschiedenen festen Schmutzstoffe wird somit verbessert, die Schmutzstoffverdichtung an den Seiten wird vermieden und der Abtransport senkrecht zur Filtrationsrichtung 6 ist gewährleistet.

### LISTE DER BEZUGSZEICHEN

- 1: Entlastungsbauwerk, Regenüberlaufbecken
- 2: Scheibenfilter
- 3: Filterrotor
- 4: Rahmen, Schwenkrahmen
- 5: Abwasserströmungsrichtung
- 6: Filtrations- und Überlaufströmungsrichtung
- 7: Wasserstandssensor
- 8: Abwasserkanal
- 9: Vorfluter
- 10: minimaler Überlaufwasserstand
- 11: maximaler Betriebswasserstand, Überströmwasserstand
- 12: Entlastungsschwelle
- 13: Abdeckhaube/Abdeckblech
- 14: Direktantrieb
- 15: Transport- beziehungsweise Auskämmscheibe, Scheiben
- 16: Gleitbuchse
- 17: Schmutzaustrag

## Patentansprüche

1. Entlastungsbauwerk mit einem Filtersystem zur Zurückhaltung von Fein- und Grobstoffen aus strömenden Flüssigkeiten, insbesondere für die kommunale und industrielle Abwasserbehandlung, wobei das Filtersystem auf einer Entlastungsschwelle (12) des Entlastungsbauwerks angeordnet ist, **dadurch gekennzeichnet, dass** das Filtersystem ein Scheibenfiltersystem ist und wobei das Scheibenfiltersystem ein Scheibenfilter (2) aus mehreren parallelen, horizontal und übereinander angeordneten und mit unterschiedlichen Drehzahlen antreibbaren Filterrotoren (3) aufgebaut ist, wobei die Filterrotoren (3) aus einer Vielzahl von auf einer Welle angeordneten und zueinander beabstandeten Auskämmscheiben (15) bestehen und dass die Auskämmscheiben (15) von in vertikaler Richtung benachbarten Filterrotoren (3) ineinander eingreifen, wobei der lichte Abstand zwischen den Auskämmscheiben (15) eine schlitzbeziehungsweise filterartige Struktur bilden, so dass die Fein- und Grobstoffe zurückgehalten werden.

2. Entlastungsbauwerk nach Anspruch 1, **dadurch gekennzeichnet, dass** die Filterrotoren (3) beidseitig in einem gemeinsamen Rahmen (4) drehbar gelagert sind.

3. Entlastungsbauwerk nach Anspruch 2, **dadurch gekennzeichnet, dass** der Rahmen (4) als Schwenkrahmen ausgebildet ist, dessen Drehpunkt im unteren Bereich des Rahmens (4) angeordnet ist.

4. Entlastungsbauwerk nach Anspruch 3, **dadurch gekennzeichnet, dass** der Rahmen (4) in einem Schwenkwinkel von 60° bewegbar ausgebildet ist.

5. Entlastungsbauwerk nach einem der Ansprüche 1 bis 4, **dadurch gekennzeichnet, dass** jeder Filterrotor (3) des Scheibenfilters (2) einen eigenen Direktantrieb (14) aufweist.

6. Entlastungsbauwerk nach Anspruch 5, **dadurch gekennzeichnet, dass** als Direktantrieb (14) der Filterrotoren (3) ein Hydraulikmotor vorgesehen ist.

7. Entlastungsbauwerk nach einem der Ansprüche 1 bis 6, **dadurch gekennzeichnet, dass** Sensoren (7) für den Wasserstand und/oder die Fließgeschwindigkeit und eine Regeleinrichtung zur Regelung der Drehzahl der Filterrotoren (3) vorgesehen ist.

8. Entlastungsbauwerk nach Anspruch 7, **dadurch gekennzeichnet, dass** die Regeleinrichtung zur Regelung der Neigung des Schwenkrahmens (4) des Scheibenfilters (2) ausgebildet ist.

9. Verfahren zur Regelung eines Entlastungsbauwerts mit einem Scheibenfiltersystem (2) nach einem der Ansprüche 1 bis 8, bei dem
- der Wasserstand mittels eines Sensors (7) festgestellt wird und
- in Abhängigkeit des Wasserstandes nur die Filterrotoren (3) angetrieben werden, die unter der Wasseroberfläche liegen.

10. Verfahren nach Anspruch 9, **dadurch gekennzeichnet, dass** die Neigung des Schwenkrahmens (4) zur Regelung der Überströmfunktion in Abhängigkeit des Wasserstandes verändert wird.

11. Verfahren nach Anspruch 9 oder 10, **dadurch gekennzeichnet, dass** die Neigung des Schwenkrahmens (4) zur Regelung der wirksamen Filterfläche in Abhängigkeit des Wasserstandes verändert wird.

## Claims

1. Relief structure with a filter system for retaining fine and coarse material from flowing liquids, in particular for municipal and industrial wastewater treatment, wherein the filter system is disposed on a relief threshold (12) of the relief structure and, **characterized in that** the filter system is a disc filter system, and wherein said disc filter system is composed of a disc filter (2) made of several parallel, horizontally and vertically stacked filter rotors (3) which can be driven by different rotational speeds, wherein said filter rotors (3) are composed of a plurality of combing discs (15) which are disposed on a shaft at a distance from each other, said combing discs (15) engaging into each other from filter rotors (3) being adjacent in the vertical direction, wherein the clear distance between the combing discs (15) forms a slit-like, respectively filter-like structure so that fine and coarse material is retained.

2. Relief structure according to claim 1, **characterized in that** the filter rotors (3) are rotatably mounted on both sides in a common frame structure (4).

3. Relief structure according to claim 2, **characterized in that** the frame structure (4) is configured as a swivel frame, the fulcrum thereof being located in the lower region of the frame structure (4).

4. Relief structure according to claim 3, **characterized in that** the frame structure (4) is configured so as to be movable at a swivel angle of 60°.

5. Relief structure according to any of claims 1 to 4, **characterized in that** each filter rotor (3) of the disc filter (2) has an individual direct drive (14).

6. Relief structure according to claim 5, **characterized in that** a hydraulic motor is provided as the direct drive (14) of the filter rotors (3)

7. Relief structure according to any of claims 1 to 6, **characterized in that** sensors (7) are provided for sensing water level and/or flow rate and a control unit is provided for controlling the rotational speed of the filter rotors (3).

8. Relief structure according to claim 7, **characterized in that** the control unit is configured for controlling the inclination of the swivel frame (4) of the disc filter (2).

9. Method for controlling a relief structure with a disc filter system according to any of claims 1 to 8, wherein
- the water level is detected by means of a sensor (7) and
- only the filter rotors (3) are driven which are below the water surface level as a function of the water level.

10. Method according to claim 9, **characterized in that** the inclination of the swivel frame (4) is changed for controlling the overflow function as a function of the water level.

11. Method according to claim 9 or 10, **characterized in that** the inclination of the swivel frame (4) is changed for controlling the effective filter surface as a function of the water level.

## Revendications

1. Structure en relief avec un système de filtrage pour retenir des matières fines et grossières dans des liquides en écoulement, en particulier pour le traitement des eaux usées municipales et industrielles, dans lequel le système de filtrage est agencé sur un seuil en relief (12) de la structure en relief, **caractérisée en ce que** le système de filtrage est un système de filtre à disque, et dans lequel ledit système de filtre à disque est composé d'un filtre à disque (2) fabriqué d'une pluralité de rotors de filtrage (3) parallèles, empilés horizontalement et verticalement et pouvant être entraînés à des vitesses de rotation différentes, lesdits rotors de filtrage (3) étant composés d'une pluralité de disques de peignage (15) étant disposés sur un arbre à une distance l'un de l'autre, lesdits disques de peignage (15) s'engrenant l'un dans l'autre à partir de rotors de filtrage (3) adjacents dans la direction verticale, la distance libre entre les disques de peignage (15) formant une structure en forme de fente, et en forme de filtre, respectivement, afin de retenir des matières fines et grossières.

2. Structure en relief selon la revendication 1, **caractérisée en ce que** les rotors de filtrage (3) sont montés de manière rotative des deux cotés dans une structure de cadre (4) commune.

3. Structure en relief selon la revendication 2, **caractérisée en ce que** la structure de cadre (4) est configurée en forme d'un cadre pivotant, le point d'appui de celui-ci étant positionné dans la région inférieure de la structure de cadre (4).

4. Structure en relief selon la revendication 3, **caractérisée en ce que** la structure de cadre (4) est configurée de manière à être mobile à un angle de pivotement de 60°.

5. Structure en relief selon l'une quelconque des revendications 1 à 4, **caractérisée en ce que** chaque rotor de filtrage (3) du filtre à disque (2) présente un entraînement directe (14) individuel.

6. Structure en relief selon la revendication 5, **caractérisée en ce que** le moteur hydraulique est prévu en tant qu'entraînement directe (14) des rotors de filtrage (3).

7. Structure en relief selon l'une quelconque des revendications 1 à 6, **caractérisée en ce que** des capteurs (7) sont prévus pour détecter le niveau d'eau et/ou le débit d'écoulement, et une unité de commande est prévue pour commander le vitesse de rotation des rotors de filtrage (3).

8. Structure en relief selon la revendication 7, **caractérisée en ce que** l'unité de commande est configurée pour commander l'inclinaison du cadre de pivotement (4) du filtre à disque (2).

9. Procédé pour commander une structure en relief avec un système de filtre à disque selon l'une quelconque des revendications 1 à 8, dans lequel
- le niveau d'eau est détecté au moyen d'un capteur (7) et
- seulement les rotors de filtrage (3) se trouvant sous le niveau de la surface d'eau sont entraînés en fonction du niveau d'eau.

10. Procédé selon la revendication 9, **caractérisé en ce qu'**inclinaison du cadre de pivotement (4) est changée pour commander la fonction de débordement en fonction du niveau d'eau.

11. Procédé selon la revendication 9 ou 10, **caractérisé en ce qu'**inclinaison du cadre de pivotement (4) est changée pour commander la surface de filtre efficace en fonction du niveau d'eau.
